# EUROPEAN PATENT APPLICATION

(11) **EP 2 966 325 A1**
(43) Date of publication of application: **13.01.2016**
(21) Application number: 15175550.1
(22) Date of filing: 06.07.2015
(51) Int. Cl.: F16K 5/06, F24D 19/10

(54) **A BALL VALVE**

(30) Priority: 05.07.2014 GB 201412047; 05.08.2014 GB 201413844; 02.02.2015 GB 201501760; 15.04.2015 GB 201506462
(71) Applicant: Rees, Alan Frederick, Swansea SA14 1ND (GB); Rees, Linda Mary, Swansea SA14 1ND (GB)
(72) Inventor: Rees, Alan Frederick, Swansea SA14 1ND (GB); Rees, Linda Mary, Swansea SA14 1ND (GB)
(74) Representative: Wynne-Jones, Laine and James LLP

(57) **Abstract**

According to the invention there is provided a ball valve (101) comprising a valve body (102) defining an inlet (104) and an outlet (105), and a fluid flow path extending between the inlet and the outlet, and a ball member (112) disposed in the fluid flow path and defining a bore channel therethrough between a bore opening and a bore exit, in which the bore channel at the exit is inclined relative to the bore channel at the opening.

## Description

The present invention relates to a ball valve for regulating the flow of a fluid, and more particularly to a ball valve for a radiator and a radiator incorporating a ball valve.

### BACKGROUND TO THE INVENTION

Valves are devices generally known in the art for controlling and regulating the flow of a fluid along a pipeline by opening, closing, or partially obstructing the flow of fluid through the valve. A valve typically comprises a cylindrical housing, referred to as the body, defining an internal fluid passage between an inlet and an outlet to which are connected incoming and outgoing fluid conduits, and a valve member interposed in the fluid passageway. The valve member is generally operable from outside of the body, to alter its position or orientation relative to the through flow of fluid, to thereby vary the resistance it provides to the flow. In some installations a valve, may be used to modulate the rate of flow of fluid along a pipeline, known as a throttling, or to prevent entirely the flow of fluid, known as shut-off. A wide variety of valve types are known, and the suitability of a valve for a specific application will depend on a number of operational factors, for example, the specified working pressures/temperatures of the fluid being controlled, or the required resolution of flow rate adjustment et cetera. A primary consideration in matching a valve to an application is the type of valve member it uses, with due consideration of the relative advantages and disadvantages of the different options.

Ball valves are a type of valve, comprised generally of a body defining internally a fluid passageway between inlet and outlet ports, and a spherical "ball" valve member located within the body and interposed in the passage. The ball member has a bore diametrically through its centre, defining a channel through the ball, and is pivotally mounted to the body, with a stem coupled to the ball extending through the wall of the body, such that rotation of the stem results in a like rotation of the ball. In this way, the ball is rotatable between an open configuration, in which the bore the of ball is aligned parallel to the incoming flow of fluid, to allow the passage of fluid through the ball, and a closed position in which the ball is oriented perpendicular to the incoming fluid, with an intact surface of the ball member facing the fluid and blocking the passage, thereby preventing its flow across the valve. As such, the valve has a range of flow rates as the ball member is rotated relative to the body and its resistance to the flow changes between open, partially open, and closed.

Ultimately, the peak flow rate of the valve, i.e. the maximum flow rate of fluid through the valve when the valve member is in the open configuration, is dictated by the diameter of the fluid passage through the valve, that is, by the internal diameter of the valve body and the ball bore diameter. In order to maximise peak flow rate it is therefore often desirable to provide a valve with a ball member having a large diameter bore.

However, conventional ball valves having a ball member with a straight bore through the centre of the ball are restricted in this respect in that, for a given size of ball member, the bore diameter may only be a maximum of around one fifth the circumference of the ball. Increasing the bore diameter further will reduce the width of the adjacent intact surface of the ball member, and so when rotated with the intact surface to face the flow, the profile of the ball member will be hollowed at either side, thereby allowing fluid to escape in an uncontrolled manner around the gap between the exterior of the ball member, and the interior surface of the valve body.

A known type of ball valve is referred to as a "reduced port" valve, in which a ball member is provided having a bore with a lesser diameter than the internal diameter of the valve body in which it is located. This allows the overall diameter of the ball member, and thus the valve body, to be minimised, however, the smaller bore in the ball member has the effect of throttling the flow of fluid, thereby restricting the peak open' flow rate of the valve, and making a reduced port valve unsuitable for high flow rate applications.

An alternative design of ball valve, known as a "full port" ball valve, overcomes the aforementioned problem of a restricted peak flow rate. A full port ball valve is one in which the bore through the centre of the ball member has a diameter equal to the internal dimension of the valve body. In this type of valve, the outer diameter of the ball member is greater than the interior diameter of the valve body at the inlet and outlet, to account for the diameter of the bore and the width of the ball wall around the bore. Typically then, the body of a full port ball valve will incorporate an enlarged valve chamber in which the ball is installed for rotation. However, as a result of the enlarged chamber, the overall size of the valve is increased, making such a valve unsuitable for use in tight spaces.

A particular problem is encountered with a radiator forming a part of a hot water heating system. A radiator is installed as a part of a hot water circuit, in which water heated by a boiler unit is circulated along a network of pipes and through a series of radiators. In a domestic environment it is often necessary to disconnect radiators, for example, during decorating, when it may be desirable to remove a wall mounted radiator. A radiator is therefore often provided with a ball valve connected at the inlet and outlet ports, such that the ball valves may be closed before the radiator is disconnected from the connecting pipework. This prevents the water and associated contaminants remaining in the radiator from spilling out of the radiator. As will be appreciated, radiators may be installed in confined spaces and mounted flush with a wall surface, thus precluding the use of a large dimension ball valve component.

A problem is encountered then in providing a compact ball valve having a high peak flow rate.

### SUMMARY OF THE INVENTION

It is therefore an object of at least some aspects of the present invention to address at least some of these issues, and provide a ball valve device which seeks to alleviate or circumvent at least some of the aforementioned problems.

According to a first aspect of the present invention there is provided a ball valve, comprising:
a valve body defining an inlet and an outlet, and a fluid flow path extending between the inlet and outlet, and
a ball member disposed in the fluid flow path and defining a bore channel therethrough between a bore opening and a bore exit,
characterized in that the bore channel at the exit is inclined relative to the bore channel at the opening.

The bore channel at the exit may be inclined relative to the bore channel at the opening by an angle of between one and one-hundred degrees from parallel, and more preferably, by thirty-five degrees from parallel.

The bore channel may comprise discrete first and second substantially linear portions joined at an angle. As an alternative to linear portions joined at an angle, the bore channel may define a progressively curved path extending between the opening and the bore exit.

The ball member may be located in the valve body by way of a pivot point and configured for rotation about a rotation axis along the pivot point. In this embodiment, the ball member may be configured for rotation about the rotation axis between an open configuration in which the bore channel at the opening is in alignment with the fluid flow path and a closed configuration in which the bore axis at the opening is out of alignment with the fluid flow path. The ball member may be configured for rotation through an angle of one-hundred and ten degrees between the open configuration and the closed configuration. The axis of rotation of the ball member may be aligned with the centreline of the valve body such that the ball member is disposed centrally in the fluid flow passage. As an alternative, the axis of rotation may be offset from the centreline of the valve body.

The valve body may define a valve seat portion internally, defining a sealing surface that seals against the outer surface of the ball member. To further improve the seal between the valve seat and the ball member, the valve seat may further comprise a sealing member in the form of an annular sealing O-ring retained in a corresponding annular groove in the face of the valve seat.

The ball member may define a keyed slot and a protruding lug diametrically opposed along the rotation axis. In this embodiment, the valve body may define internally an indent in which the protruding lug of the ball member is received, and an aperture aligned with the keyed slot in the ball member. The valve apparatus may then further comprise a turnscrew having a first enlarged head end and a second keyed end, the turnscrew being inserted through the aperture in the valve body and partially inserted into the keyed slot in the ball member.

The ball valve may further comprise a second turnscrew inserted through a second aperture diametrically opposed in the valve body relative to said first aperture, to engage said ball member.

The valve body wall may define internally a recess in said valve chamber proximal to the exit of the bore channel, when the ball valve is in the open configuration.

According to a second aspect of the present invention there is provided a radiator including a ball valve, the ball valve comprising:
a valve body defining an inlet and an outlet, and a fluid flow path extending between the inlet and outlet, and
a ball member disposed in the fluid flow path and defining a bore channel therethrough between a bore opening and a bore exit,
characterized in that the bore channel at the exit is inclined relative to the bore channel at the opening.

### BRIEF DESCRIPTION OF THE DRAWINGS

In order to better understand the present invention, and to show more clearly how an exemplary embodiment thereof may be carried into effect, reference will now be made, by way of example only, to the accompanying drawings in which:
Figure 1 shows the components of a ball valve in an exploded perspective view;
Figures 2a and 2b show the ball valve of Figure 1 in the open configuration, in top plan and section views;
Figures 3a, 3b and 3c, show in isolation the ball member of the ball valve illustrated in Figures to 3, in top section, side section, and top plan views;
Figure 4 shows the ball valve device in side section view;
Figures 5a, 5b, 5c and 5d, shows the turnscrew of the ball valve device in isolation, in perspective, top plan, and side views;
Figure 6a and 6b shows in top plan and section views a ball valve device having an alternative ball member;
Figures 7a, 7b, 7c, 7d and 7e show in isolation the ball member of the ball valve device depicted in Figure 6, in perspective, side, top section, front section and top plan views;
Figure 8a and 8b show in top cross section and side plan view a ball valve device according to an alternative embodiment of the invention;
Figure 9 shows in exploded perspective view a radiator comprising a ball valve according to an embodiment of the invention; and
Figure 10a, 10b and 10c shows in partial cross section a ball valve according to an alternative embodiment of the invention.

### DETAILED DESCRIPTION OF THE DRAWINGS

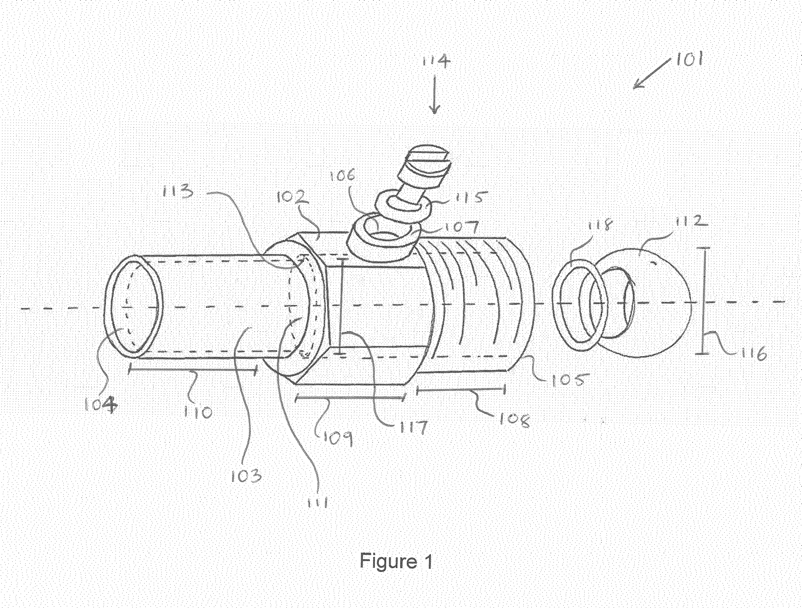

Turning to the drawings, there is illustrated in Figure 1 an exploded perspective view of a ball valve according to an exemplary embodiment of the present invention. Ball valve 101 comprises a valve body 102, the body defining internally cavity 103 which defines a fluid flow path through the valve body between an inlet port 104 and an outlet port 105, coaxially aligned at first and second ends of the body respectively, and a hole 106 and collar 107 in the valve body wall. Valves such as ball valve 101 are used for controlling or regulating the rate of flow of a fluid, such as a liquid, a gas, a slurry, a fine particulate material, or a mixture of dissimilar fluids, along a pipeline, for example, for transferring fluids between distributed process machines.

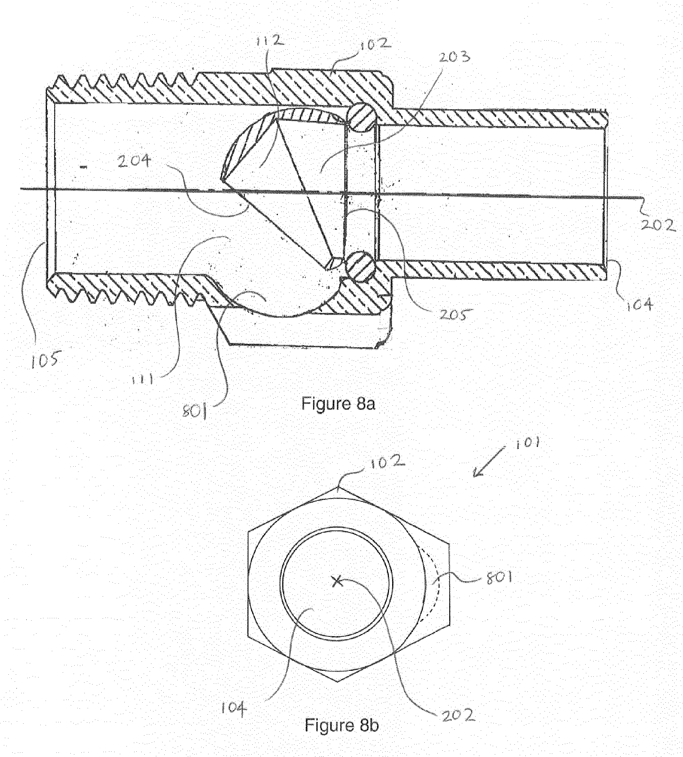

At the second end, proximal to said outlet port 105, valve body 102 defines an externally threaded portion 108, comprising a helical pitched thread. A central portion 109 of the valve body defines an outer hex nut profile, configured to be engaged by a correspondingly shaped hex spanner. The valve 101 may be connected then to an adjacent component by screwing the valve body into a correspondingly threaded opening. The first, inlet port end of the valve body defines a valve tail section 110, defining a cylindrical tube having a smooth outer profile. In a particular embodiment, described with reference to Figure 8, the ball valve 101 suitable for use as a radiator isolator valve and is connected to the inlet port of a hot water radiator by screwing the threaded portion into a correspondingly threaded opening in the radiator.

Approximately halfway along the internal cavity 103, equidistant between said first and second ends of the valve body, valve body 102 defines internally valve chamber section 111 in the fluid flow path, in which a valve member, in the form of ball member 112, is disposed centrally in the fluid flow path to abut against valve seat 113 defined by the valve body. Ball member 112 is retained in the valve chamber section 111 by means of turnscrew 114 which passes through hole 106 in the valve body wall, and is abutted against the valve seat for relative rotation there against. An annular sealing O-ring 115 is further provided about the turnscrew shaft and configured to form a fluid-tight seal between turnscrew 114 and valve body 102, to thereby prevent the outward ingress of a fluid passing through the valve. As will be described in detail later, the orientation of the ball member 112 determines the open or closed state of the valve.

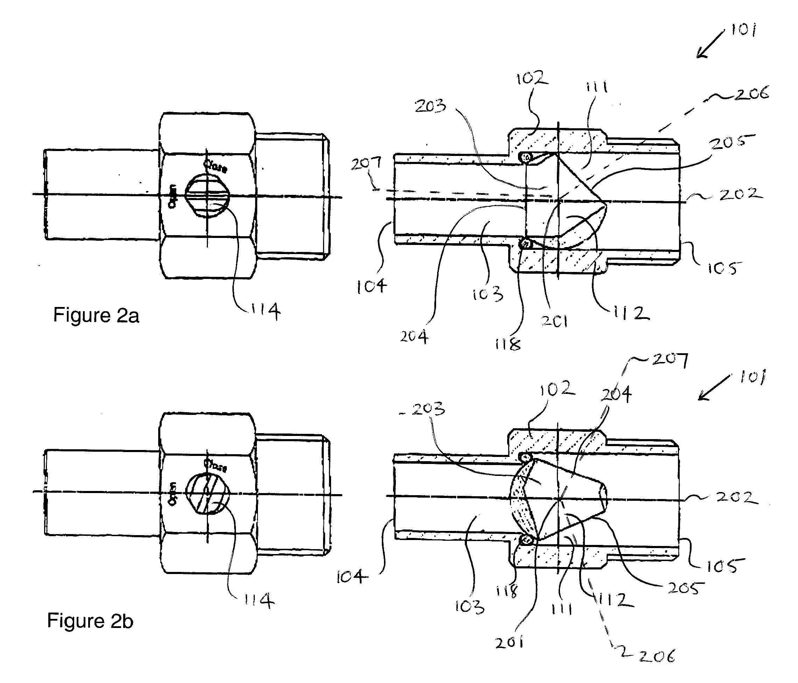

Ball member 112 is substantially spherical in profile, having a smooth outer surface, and an outer diameter (OD) 116 closely corresponding to the inner diameter (ID) 117 of the valve chamber section 111 of the valve body 102, so as to minimise the annular gap therebetween. Ball member 112 defines a bore channel passing through the ball and through which a fluid may pass, the specifics of which will be described in detail later with particular reference to Figures 2, 3 and 4.

Ball valve 101 further comprises a sealing member, in the form of an annular O-ring 118 configured to be received in a corresponding annular groove of the valve seat face that abuts against ball member 112. The sealing member thus defines a sealing surface that bears against the outer surface of the ball member 112 to seal the outer surface of ball member 112 against valve seat 113. A number of suitable sealing materials from which sealing member 118 may be constructed are known, including PTFE or nylon, and in the embodiment, O-ring 118 comprises a resiliently deformable elastomer material such as Nitrile rubber (NBR).

In the embodiment, ball valve 101 is configured as a valve suitable for connection to a radiator for use in a hot water heating system, and is required to flow water heated to around 55 degrees Celsius. The components of the valve are thus constructed of materials that are not deformed or fatigued when heated. In the particular embodiment illustrated, the valve body 102, ball member 112, and turnscrew 114, are all comprised of a stainless steel, which is not damaged by heat and will not corrode when exposed to water. It will however be appreciated that, as is conventional in valve technology, the particular choice of material may vary dependent on the requirements of the valve et cetera. For example, where a valve is required to handle low temperature, low pressure fluids, it may be preferred to construct the valve body and ball member from a synthetic plastics material, to thereby reduce manufacturing costs. Equally, the various components of the valve may be constructed of mutually different materials, for example, copper and/or brass.

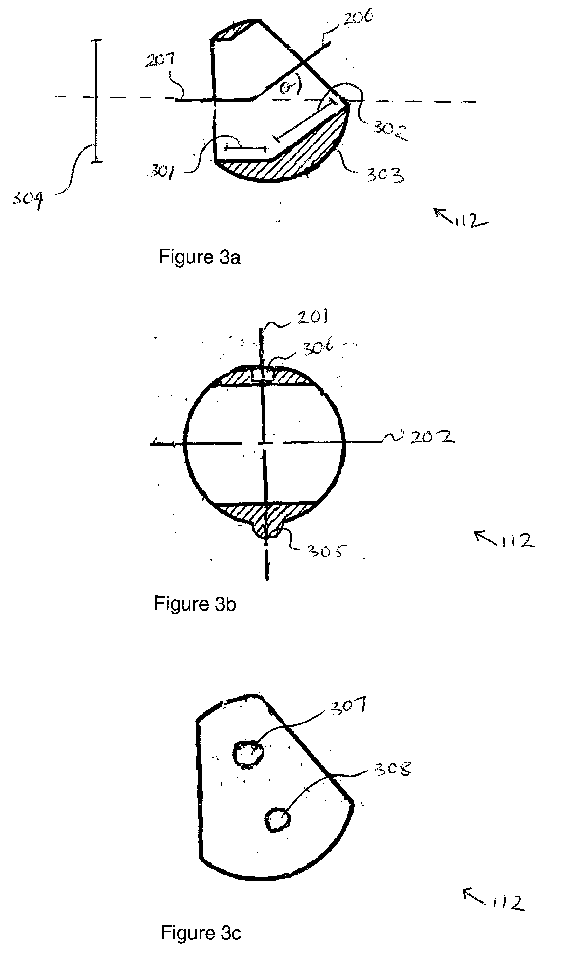

Referring now to Figures 2 and 3, the configuration of ball valve 101 is depicted in section, firstly in the open configuration depicted in Figure 2a and secondly in the closed configuration shown in Figure 2b. Valve body 102 defines internally cavity 103, extending between an inlet end 104 and an outlet end 105, which defines the path along which fluid flows through the valve. Ball member 112 is located in the valve chamber 111 disposed in the fluid flow path about an axis of rotation 201 that is aligned with the longitudinal centre line 202 of the valve body. The axis of rotation 201 is arranged relative to the valve seat 113 such that as the ball member rotates about its rotation axis 201, its outer surface runs across the O-ring 118 maintaining close contact between the pair.

Ball member 112 defines a bore channel 203 extending right through the ball along a plane that is substantially orthogonal to the rotation axis 201, between a bore opening aperture 204 on a first side of the ball, and a bore exit aperture 205 on a second side. As depicted in the drawings, bore channel 203 defines a non-linear passage, which undergoes a change in direction as it passes through the ball between the opening 204 and the exit 205. In this way, the bore channel at the exit 205 is inclined relative to the bore channel at the opening 204. That is to say the orientation of the channel at the exit of the bore is inclined relative to the orientation at the opening, such that the bore axis 206 at the exit 205, i.e. the centreline parallel with the channel walls, and the bore axis at the opening 204 are inclined. In this way, fluid flowing through the bore channel undergoes a change of direction, such that the fluid flow out of the bore channel exit is inclined relative to the direction of the fluid flow into the bore opening. The bore channel 203 has a substantially circular cross section along its length to thereby improve the flow of a fluid through the bore and reduce fluid turbulence.

In the embodiment, the bore channel 203 comprises discrete first and second substantially linear portions 301, 302 respectively, at the opening and exit of the bore, that are joined at an angle of thirty-five degrees from parallel. As an alternative to linear portions joined at an angle, ball member 112 may instead define a progressively curved path extending between the opening 204 and the exit 205, such that between the opening and the exit, the bore gradually deviates from a linear path, such that the exit the bore channel is inclined relative to the bore channel at the opening by an angle corresponding to the degree of deviation of the curve from linear.

Ball member 112 is thus configured for rotation about said rotation axis 201 between the open configuration shown in Figure 2a, in which the bore channel at the opening 204 is in alignment, that is to say arranged incident and parallel to, the longitudinal axis 202 of the valve body and the fluid flow path, and the closed configuration shown in Figure 2b, in which the bore channel at the opening 204 is out of alignment, i.e. not parallel with the fluid flow path. In the open configuration, fluid flowing through the valve enters the bore channel 203 through the opening 204 and flows therethrough to the bore exit 205. As the ball member 112 is rotated through to the closed position, the opening of the bore channel is progressively moved out of alignment with the fluid flow, thereby gradually increasing the resistance to the fluid flow and reducing the flow rate. In the fully closed position shown, ball member 112 has been rotated about its rotation axis through an angle of around one-hundred and ten degrees, such that an intact surface, i.e. a portion of the outer surface of the ball member not penetrated by the bore channel, faces the fluid flow path and is sealed against the O-ring 118 of valve seat 113, to thereby prevent the flow of fluid through the valve.

As illustrated in the Figures, by angling the bore channel such that the opening and exit of the bore are relatively inclined from parallel, as opposed to intersecting antipodal points about the circumference of the bore, the ball member defines an intact surface 303 having a relatively larger area, thereby allowing the diameter 304 of the bore channel 203 to be increased, without preventing the ball member from sealing against the valve seat 113 when in the closed configuration.

Referring in particular to Figures 3b and 3c, ball member 112 defines a protruding lug 305 at a base end of its rotation axis 201 and a keyed slot 306, in the form of recesses 307 and 308, diametrically opposed to said lug at the top end of said rotation axis.

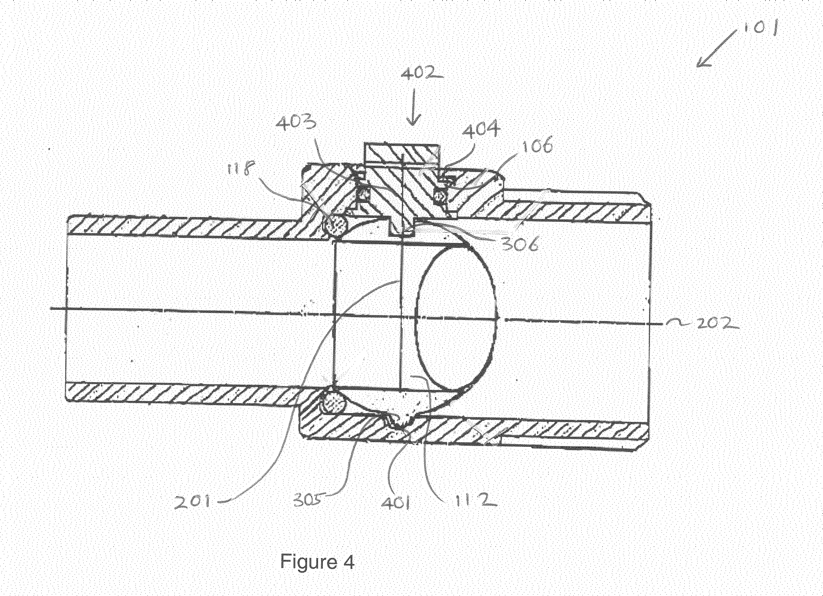

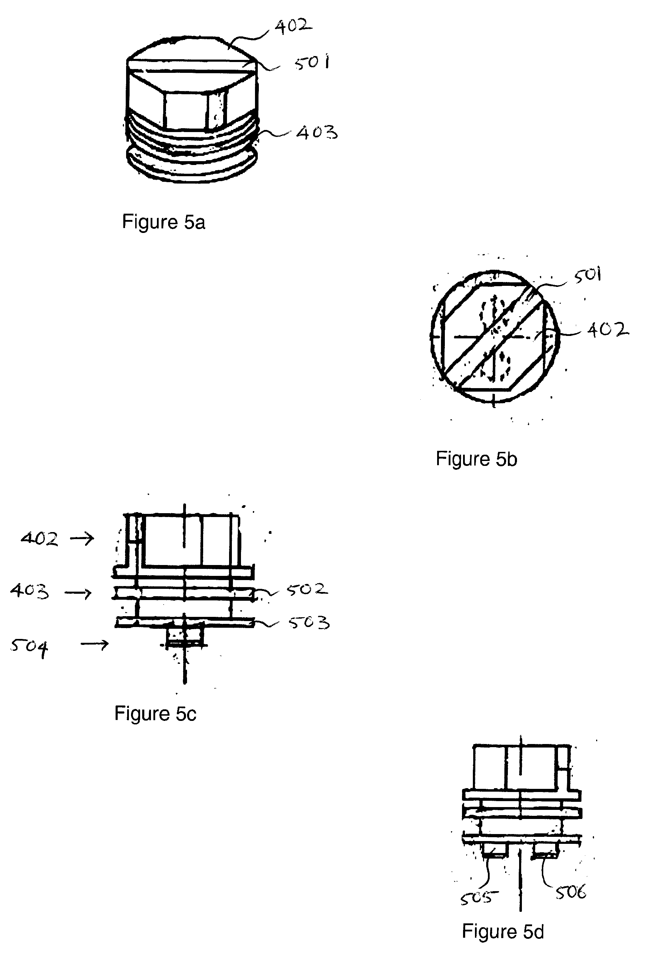

Turning then to Figures 4 and 5, valve device 101 is shown in cross section with ball member 112 located in the valve chamber 111 in the fluid flow path. Ball member 112 is retained in the valve chamber at its lower end by protruding lug 305 which is received in an indent 401 defined by the valve body, and at the top end by turn screw 114, which is inserted through hole 106 in the valve body wall and into keyed slot 306 in the ball member, such that turnscrew 114 and ball member 112 are rotationally coupled. Turnscrew 114 defines an enlarged head part 402, defining on its face a slot 501 for receiving a torque from a correspondingly shaped driver, and shaft part 403, defining ribs 502, 503, extending radially from the shaft.

Turnscrew 114 is located through the hole 106 in the valve body wall, with sealing O-ring 115 interposed between the shaft and the valve body wall, and the turnscrew is retained in place using circlip 404 which bears against the valve body. As depicted, turnscrew 114 has a keyed end 504 defining stems 505, 506, configured to engage with recesses 307, 308 in the ball member to mechanically couple the pair. Imparting a torque to turnscrew 114 thus results in rotation of the ball member 112 in the valve chamber, to transition the ball between the fully open position of Figure 2a, in which fluid is allowed to flow freely through the valve fluid flow passage, and the closed position of Figure 2b, in which fluid is prevented from flowing through the valve.

By retaining said ball member 112 in the valve chamber section 111 by means of protruding lug 305 and turnscrew 114 which engages stems 505 and 506 with the ball member, ball member 112 is prevented from rearward movement as would tend to occur under the force of fluid passing through the valve. Rearward movement would reduce the pressure exerted on the sealing member 118 by the outer surface of the ball member, and tend to break the seal there between, which could result in leakage of fluid about the ball member even in the closed configuration. This effect is countered in ball valve devices of the prior art by providing the ball member within a bearing block enclosing the ball from all sides and thereby retaining the ball member in the valve chamber section for relative rotation. As an alternative, it is known to provide the valve chamber section with a second valve seat and corresponding sealing O-ring, positioned behind the ball member, so as to bear against the outer surface of the ball member at an opposing side to the first valve seat. In this arrangement, the ball member is retained in place between the opposing valve seat sealing members, thereby preventing rearward, or forward, movement of the ball member in the valve chamber. Such an arrangement however results in an increase in manufacturing complexity and number of operations required to assemble a ball valve, and thus the presently disclosed arrangement is preferred for commercial reasons. Nevertheless, it will be appreciated that in certain embodiments of the present invention, it may be desirable to provide the ball member with a second valve seat opposed to the first valve seat, for example, where the ball member is not attached to the valve body along a rotation axis, as may be the case where the ball member is configured to rotate freely in all directions.

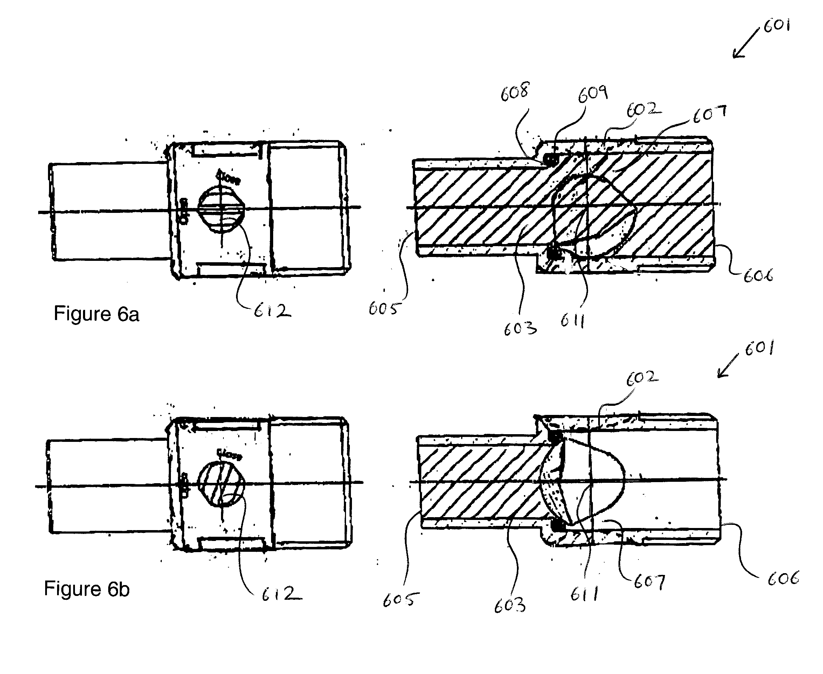

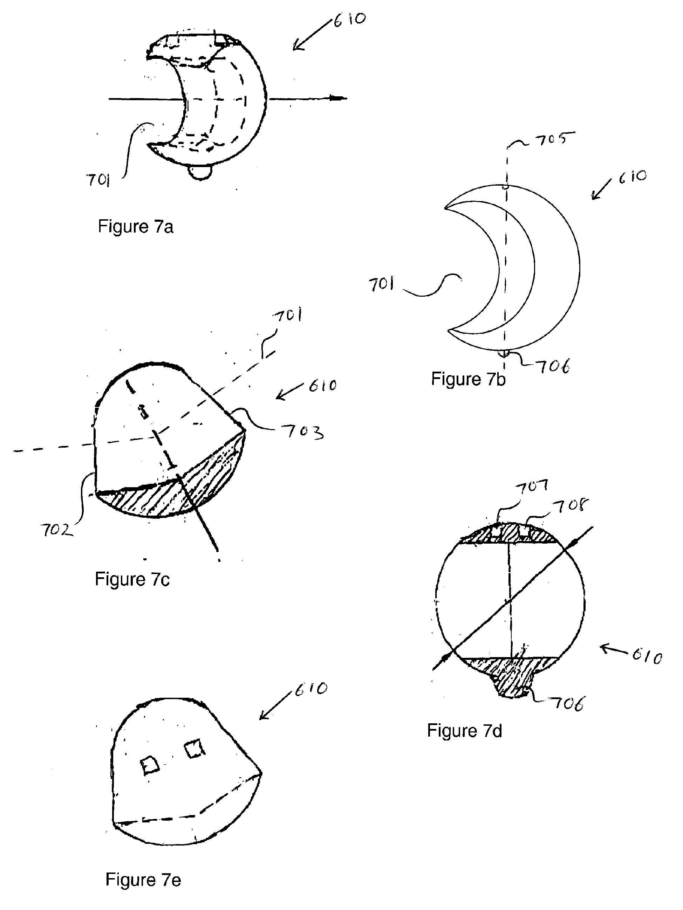

Figures 6 and 7 illustrate an alternative ball member, with the remaining components of the ball valve 601 being substantially identical to those of ball valve 101. Ball valve 601 comprises of the valve body 602, which defines internally a cavity 603 defining a fluid flow path along longitudinal axis 604, between an inlet end 605 and an outlet end 606. A valve chamber portion 607 is defined by the internal cavity approximately equidistant between the first and second ends and includes a valve seat 608 comprising a sealing O-ring 609 received in a corresponding annular groove in the valve seat face. A ball member 610 is located in the valve chamber portion 607 disposed in the fluid flow path for rotation about rotation axis 611, between the open configuration depicted in Figure 6a and a closed configuration depicted in Figure 6b.

With particular reference to Figure 7a, the ball member 610 is substantially spherical in profile and defines a bore channel 701 passing right through the ball, between the bore opening 702 and the bore exit 703. The bore channel 701 is angled as it passes through the ball, such that the bore channel at the opening 702 of the ball is inclined relative to the bore channel at the exit 703 of the ball. Bore channel 701 is offset from the centre axis 705 of the ball, and the bore channel partially intersects the outer surface of the ball thereby defining a crescent shaped cross section to the ball member, with the bore channel bounded partially about its circumference by the intact surface of the ball member 610.

In the embodiment the, ball member 610 is located in the valve chamber in the path of fluid flow through the valve, for rotation about rotation axis 611. Rotation axis 611 is aligned with the centreline 604 of the valve body and passes through the centreline of the bore channel. Ball member 610 is retained in place by protruding lug 706 which engages a corresponding indent defined internally in the valve body, and by turnscrew 612 which engages corresponding recesses 707 and 708 in the outer surface of the ball as previously described. The ball member 610 is thus configured to rotate eccentrically about rotation axis 611, with bore channel 701 being moved through an arc about the axis.

Ball valve 601 is shown in the open configuration in Figure 6a in which the axis of the bore channel at the opening 702 is aligned parallel and incident to the fluid flow path through the valve body. In this configuration fluid is allowed to flow between the intact surface of the ball member and the interior wall of the valve body 602, thereby resulting in a relatively larger effective bore diameter than the ball member 112 of valve 101. The valve is shown in the closed configuration in Figure 6b in which ball member 610 has been rotated through approximately 110 degrees about the rotation axis, such that the opening of the bore channel is out of alignment with the fluid flow path and the intact outer surface of the ball member is brought into contact with the valve seat sealing member 609, to thereby seal the valve and prevent the flow of fluid there along.

Ball valve 101, described previously with reference to Figures 1 to 5 is shown in a top section view in Figure 8a and in a side view in Figure 8b, in which the valve body 102 has been modified by machining a recess 801 in the interior of the valve body.

In certain jurisdictions, regulations exist which dictate the specification of a valve such as ball valve 101. In the United Kingdom for example, regulation B.S. 2767 dictates that the internal diameter of a valve used for controlling the flow of heated water through a pipeline to a radiator must be at least equal to twelve milli-meters. In order to conform to this standard a valve, such as ball valve 101, must have a continuous internal dimension of at least twelve milli meters. Depending on the degree of relative inclination of the bore channel through the ball member 112 between the bore opening and the bore exit, the effective internal diameter of the valve chamber section of ball valve 101 may be reduced. The valve tail portion 110 defines internally a passage having an internal diameter 802 of twelve millimetres as is required. To allow connection of the valve to standardised pipe fittings sizes, the valve chamber section 111 and threaded portion 108 have an internal diameter 803 of sixteen millimetres.

In the specific embodiment, the wall section thickness of the valve body about the valve chamber section 111 is relatively increased, such that the thickness of the wall on a first side 804 of the valve body is greater than the thickness of the wall on the second side 805 of the valve body. The valve body 102 is then machined internally so as define a recess 801 in the portion of the valve body wall about the valve chamber section. The recess extends into the wall of the valve chamber section in a direction perpendicular to the rotation axis of the ball member and is aligned directly with the exit 204 of the bore channel 203, such that fluid flowing out of the bore exit 204 is incident in the recess.

The purpose of the recess machined in the wall of the valve chamber section is to increase the internal diameter of the valve body at the inclined exit of the bore channel, which directs the fluid flow against the valve body wall. As previously discussed, the desire to increase the internal diameter of the valve body is balanced against the requirement to minimise the external diameter of the valve body, to allow a ball valve according to the present invention to be installed in a confined space. Thus, it will be appreciated that valve body 102 may be alternatively adapted so as to increase the internal diameter of the valve body proximal to the bore exit of the ball member. For example, in an alternative embodiment, the thickness of the wall section may be substantially uniform along the entire valve body, and a recess may be machined in the valve body wall thus reducing the thickness of the wall section. In a second alternative embodiment, the diameter of the valve body at the valve chamber section may be increased about the circumference of the valve body, to create an enlarged valve chamber section.

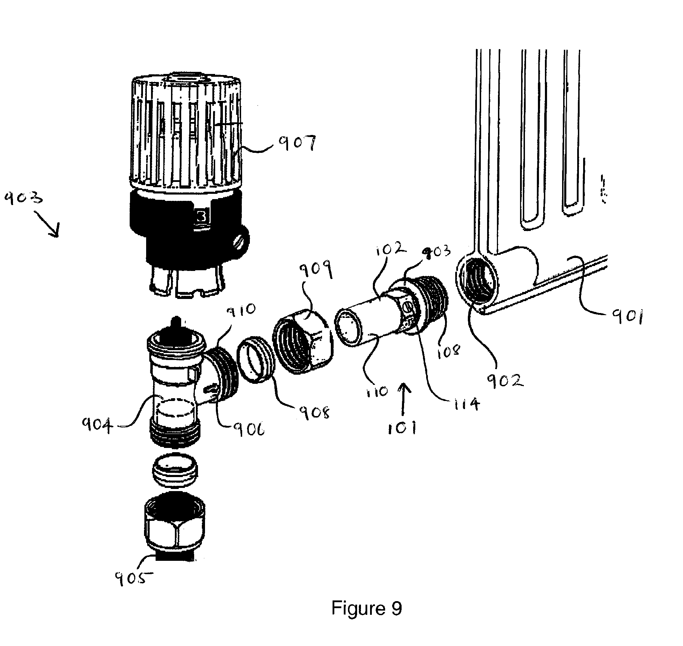

Figure 9 shows in an exploded view the ball valve 101 of the invention as it would be connected to a radiator 901. In the specific embodiment, ball valve 101 is suitable for use as an isolator valve of the hot water radiator 901. As will be understood by the skilled person, a radiator is used as a component of a hot water heating system to heat a room. Generally a heating system comprises of a boiler which heats water, commonly using either an electrical resistance heating element immersed in the water, or a natural gas burner and heat exchanger, and then pumps the heated water around a closed circuit of pipework and through radiators distributed around a building. As the heated water flows through the radiator between an inlet and outlet, the radiator is warmed by the water, and in turns radiates infra-red energy to the room. The spent water is then returned to the boiler through a return pipe which completes the sealed circuit.

As is conventional, radiator 901 comprises an internally threaded inlet port 902 at a base end, into which the threaded portion 108 of the valve body 102 is rotatably inserted by a torque applied to the hex nut section 109. The valve is tightened until collar 903 associated with the hex nut section is brought into contact with the face of the inlet port to thereby form a water-tight seal. For this purpose, it is common for a sealing aid for example PTFE tape, to be applied to the threads of the ball valve threaded portion. Valve tail section 110 of the ball valve is connected to thermostatic radiator valve, indicated generally at 903, which comprises of an adjustable flow rate valve part 904, in which a plunger moves within a chamber to vary the rate of flow of water through the valve, between an inlet pipe 905 and the outlet 906. This is facilitated by rotary control knob 907, which allows manual control of the position of the plunger. Valve tail 110 is connected to the outlet portion 906 of the valve part 904, by way of a compression fitting, in which compression ring 908 is inserted over the valve tail, and valve tail is inserted in the outlet port 906 of the valve part 904, with coupling nut 909 threaded onto a thread 810 formed on the outlet portion 906 of the valve part 904, and tightened to compress compression ring 908 and form a seal. Valve part 904 is then connected to inlet pipe 905 in a similar manner.

Thus, ball valve 101 may be used to selectively isolate the flow of water into or out of the inlet port of the radiator 901. In normal use, it is expected that the ball valve will remain in the open configuration, in which the opening of the bore channel in the ball member is aligned with the fluid flow path, thus allowing heated water to flow into the radiator from the inlet pipe 905. As discussed previously, the relatively greater diameter of the bore channel as compared to ball valves of the prior art, allows for an increased flow rate, without a corresponding increase in the overall size of the ball valve.

If the radiator is to be disconnected from the system, the thermostatic radiator valve may be set to an 'off' position in which water is prevented from flowing into the radiator from the inlet pipe 905. Turnscrew 114 of ball valve 101 may then be turned, as to rotate the ball member 112 in the valve chamber, so that the opening of the bore channel is out of alignment with the fluid flow path, thereby preventing residual water in the radiator from flowing out of the radiator. The nut 909 may then be loosened and the valve tail section 110 of the ball valve withdrawn from the outlet portion 906 of the valve part 904, leaving the ball valve 101 connected to the radiator inlet port 902, thereby allowing removal of the radiator with minimal fluid loss.

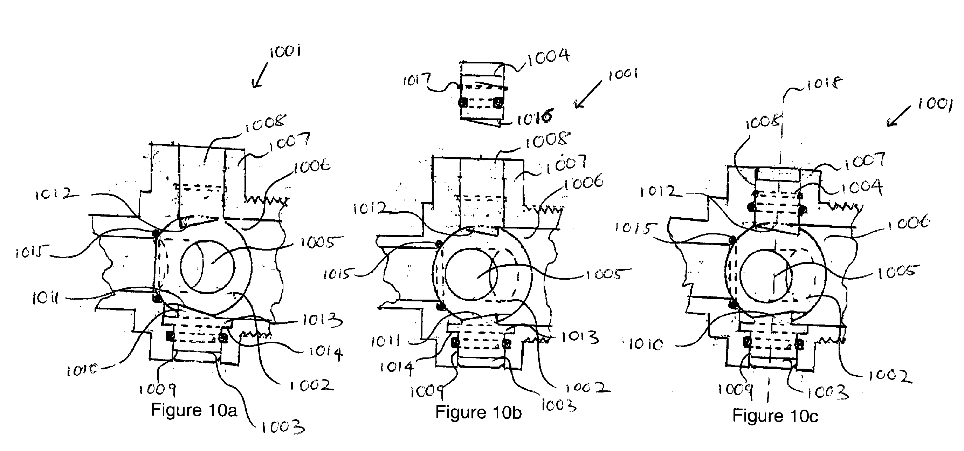

A ball valve according to a further alternative embodiment of the present invention is shown partially in Figures 10a to 10c. Ball valve 1001 differs from ball valve 112 of Figures 1 to 5, in that the ball member 1002 is engaged by first and second turnscrews 1003, 1004, which engage the ball member from opposing sides of the valve body.

A problem is encountered in a ball valve configured as a valved hot water radiator tail, as illustrated in Figure 9, in as much that the threaded valve body is screwed into a tapped port in the radiator, until a collar on the valve body is tight against the face of the port. However, this may lead to a situation in which the head of the turnscrew is inaccessible, for example, the head of the turnscrew may be facing the wall, and so it would be difficult or impossible to turn the ball member in the valve body, as would be required to open or close the valve. As a result, an installer may tend to either over, or under, tighten the valve into the tapped radiator port, to position the turnscrew in an accessible position. Under or over tightening of the valve into the radiator can undesirably lead to leaking of water out of the radiator port, or damage to either of the valve or the radiator.

In the specific embodiment then, ball valve 1001 is provided with a ball member 1002 defining a bore channel 1005 therethrough, in which the ball member is located in the valve chamber section 1006 of a valve body 1007. The valve body defines holes 1008 and 1009 diametrically opposed by one-hundred and eighty degrees about the valve body. A first turnscrew 1003 engages the ball member through the first hole 1009 in the valve body 1007, and a second turnscrew 1004 engages the opposing side of the ball member through the second hole 1008. Similarly to turnscrew 114 of ball valve 101, turnscrews 1003 and 1004 are configured to mechanically couple to the ball member such that rotation of either turnscrew causes the ball member to rotate in the valve body. In this way, the ball member 1002 may be rotated by turning either of turnscrews 1003, 1004, and at least one turnscrew will be accessible regardless of the orientation of the valve.

Turnscrews 1004 and 1005 each define a head end, and a keyed end defining a profile configured to engage a correspondingly keyed profile in the ball member. Turnscrews 1004 and 1005 each have a tongue 1010, 1016, extending orthogonally from the base end of the turnscrew. The tongue is wedge shaped such that its elevation from the end face of the turnscrew increases along its length, defining a triangular shaped cross section. Each said tongue is configured to engage in a correspondingly wedge shaped groove 1011, 1012, in the outer surface of the ball member 1002, such that each tongue is received in the groove, thereby rotationally coupling the turnscrews to the ball member.

Turnscrew 1003 defines an enlarged rib 1013 configured to bear against a recess 1014 machined in the interior wall of the valve body 1007 about the hole 1009. Thus, turnscrew 1009 is fitted into the hole from inside of the body, with the head end facing outwardly and the tongue 1010 facing inwardly in the valve chamber section. As depicted in Figure 8a, the turnscrew 1003 is initially fitted into hole 1009, with the wedge angled towards the outlet port of the valve. The ball member 1002 is then inserted into the valve chamber section by sliding the ball member through the outlet port and into the valve chamber so that the tongue 1010 engages into groove 1011 in the ball member 1002.

As depicted in Figure 10b, turnscrew 1003 is then rotated in the hole 1009 by one-hundred and eighty degrees and pressed firmly against sealing O-ring 1015. Said second turnscrew 1004 is then inserted through hole 1008 so as to engage tongue 1016 in groove 1012 in the ball member. Circlip 1017 retains turnscrew 1004 in position in hole 1008. The ball valve is shown fully assembled in Figure 8c in which the ball member 1002 rotates about rotation axis 1018 along turnscrews 1003 and 1004, with the outer surface of the ball member bearing against sealing O-ring 1015.

It will be appreciated, that the tongue and groove profiles defined by the turnscrews 1003, 1004 and ball member 1002 are such as to enable easy engagement of the ball member with the turnscrews. That said, alternatively, the second turnscrew 1004 may define a plurality of protruding stems received in corresponding slots in the ball member 1002 as described previously with reference to Figure 5.

From the foregoing description it will be apparent to a person skilled in the art, that modifications and variations can be made to the described embodiments without departing from the scope of the invention as defined by the appended claims.

## Claims

1. A ball valve, comprising:
a valve body defining an inlet and an outlet, and a fluid flow path extending between the inlet and outlet, and
a ball member disposed in the fluid flow path and defining a bore channel therethrough between a bore opening and a bore exit,
**characterized in that** the bore channel at the exit is inclined relative to the bore channel at the opening.

2. The ball valve of claim 1, **characterized in that** the bore channel at the exit is inclined relative to the bore channel at the opening by an angle of thirty-five degrees.

3. The ball valve of claim 1 or claim 2, **characterized in that** the bore channel comprises discrete first and second substantially linear portions joined at an angle.

4. The ball valve of claim 1 or claim 2, **characterized in that** the bore channel defines a progressively curved path between the bore opening and the bore exit.

5. The ball valve of claims 1 to 4, **characterized in that** the ball member is configured for rotation about a rotation axis.

6. The ball valve of claims 1 to 5, **characterized in that** the bore channel extends along a plane that is substantially orthogonal to the rotation axis.

7. The ball valve of claim 5 or claim 6, **characterized in that** the ball member is configured for rotation about the rotation axis between an open configuration in which the bore channel at the opening is in alignment with the fluid flow path and a closed configuration in which the bore channel at the opening is out of alignment with the fluid flow path.

8. The ball valve of claim 7, **characterized in that** the ball member is configured for rotation about the rotation axis through an angle of one-hundred and ten degrees between the open and closed configurations.

9. The ball valve of claims 5 to 9, **characterized in that** the ball member rotation axis is aligned with the centre line of the valve body.

10. The ball valve of claims 1 to 10, **characterized in that** the valve body further defines a valve seat defining a sealing surface that seals against said ball member.

11. The ball valve of claim 11, **characterized in that** the valve seat further comprises a sealing member in the form of a sealing O-ring.

12. The ball valve of claims 1 to 12, **characterized in that** the ball member defines a keyed slot and a protruding lug diametrically opposed along the rotation axis.

13. The ball valve of claim 13, **characterized in that** the valve body defines a recess in which said protruding lug is received, and further defines an aperture aligned with said keyed slot.

14. The ball valve of claim 14, further comprising a turnscrew having a first head end and a second keyed end, **characterized in that** the keyed end of the turnscrew is inserted through said aperture in the valve body into the keyed slot in the ball member.

15. A radiator including a ball valve, the ball valve comprising:
a valve body defining an inlet and an outlet, and a fluid flow path extending between the inlet and outlet, and
a ball member disposed in the fluid flow path a defining a bore channel therethrough between a bore opening and a bore exit,
**characterized in that** the bore channel at the exit is inclined relative to the bore channel at the opening.
